# DEMANDE DE BREVET EUROPEEN

(11) **EP 1 376 998 A1**
(43) Date de publication de la demande: **02.01.2004**
(21) Numéro de dépôt: 03291450.9
(22) Date de dépôt: 16.06.2003
(51) Int. Cl.: H04M 3/432, H04M 11/10, H04M 3/533

(54) **Programmation interactif de rappel d'événement**

(30) Priorité: 21.06.2002 FR 0207748
(71) Demandeur: FRANCE TELECOM, 75015 Paris (FR)
(72) Inventeur: Moussy, Elise, 38190 Sainte Agnès (FR); Brun, Alain, 38450 Le Gua (FR); Grattard, Gilles, 38610 Gieres (FR)
(74) Mandataire: Casalonga, Axel

(57) **Abrégé**

Ce système interactif de programmation de rappel d'évènement par messagerie, à partir d'un poste de télécommunications (14), comporte un serveur vocal interactif (10) raccordé à un réseau téléphonique et adapté pour communiquer avec le poste, un étage logiciel (18) de programmation de rappel d'événement raccordé au serveur vocal (10) et accessible par un usager par l'intermédiaire du serveur vocal, et des moyens de stockage de messages accessibles à la demande de l'usager pour y stocker des messages entrés au moyen du poste et récupérer lesdits messages.

## Description

La présente invention concerne un système et un procédé interactif de programmation de rappel d'événement par messagerie.

Plus particulièrement, l'invention concerne un système et un procédé interactif de programmation de rappel d'événement par messagerie à partir d'un poste de télécommunications.

Dans le cadre de la présente description, par poste de télécommunications, on entend tout type d'appareil portatif doté d'une fonction de télécommunications par téléphonie, tel qu'un poste téléphonique fixe, mobile ou sans fil, un assistant personnel, ...

Certains postes de télécommunications sont pourvus d'une fonction de réveil automatique permettant l'émission d'un signal d'alarme associé, le cas échéant, à un message textuel, à un instant prédéterminé.

Lorsque l'émission du signal d'alarme est couplée à un message textuel, il est possible de récupérer le contenu d'un message stocké en mémoire dans le poste à un instant choisi par le porteur du poste. On conçoit néanmoins que ce type de service est relativement fastidieux à utiliser, dans la mesure où il nécessite la saisie du message au moyen d'une interface homme-machine spécifique, de type clavier, interface graphique... Or les postes disponibles sur le marché, en particulier les postes téléphoniques, ne sont pas tous pourvus d'interfaces permettant une saisie aise de textes.

Par ailleurs, les messages textuels sont hébergés au sein même du poste. Dès lors, la longueur des messages pouvant être mémorisés est nécessairement limitée par la capacité de mémorisation du poste.

Le but de l'invention est donc de pallier ces inconvénients et de fournir un système et un procédé interactif de programmation de rappel d'événement capables de restituer à un utilisateur des informations à un ou plusieurs instants choisis par lui, permettant l'entrée de messages de manière aisée et capables en outre de stocker des messages de taille accrue.

Ainsi, selon l'invention, il est proposé un système interactif de programmation de rappel d'événement par messagerie, à partir d'un poste de télécommunications comprenant un serveur vocal interactif raccordé à un réseau téléphonique et adapté pour communiquer avec lequel le poste, un étage logiciel de programmation de rappel d'événement raccordé au serveur vocal et accessible par un usager par l'intermédiaire du serveur vocal, et des moyens de stockage de messages accessibles à la demande de l'usager pour y stocker des messages entrés au moyen du poste et récupérer lesdits messages.

L'utilisation d'un serveur vocal interactif permet donc de mémoriser des messages au sein du serveur, de récupérer ces messages et de programmer la restitution de cers messages en énonçant simplement ces messages et des instructions de programmation.

Selon une autre caractéristique de ce système, celui-ci comporte en outre un calendrier logiciel raccordé à l'étage logiciel de programmation, et en ce que ledit étage logiciel de programmation comporte des moyens pour commander un appel du poste de l'usager à un instant et selon des modalités programmés par l'usager.

Selon un mode de réalisation particulier, le serveur vocal interactif comporte des moyens d'identification de l'usager.

Selon l'invention, il est également proposé un procédé interactif de programmation de rappel d'événement par messagerie au moyen d'un système interactif tel que défini ci-dessus, comprenant les étapes suivant lesquelles on appelle un serveur vocal interactif à partir dudit poste et l'on enregistre un message dans des moyens de stockage de messages, ledit message pouvant ultérieurement être récupéré, à la demande d'un usager, par appel du serveur et interrogation des moyens de mémorisation.

Selon un mode de mise en oeuvre de ce procédé, celui-ci comporte en outre une étape de programmation d'un appel du poste de télécommunications, par le système de programmation de rappel, à un instant et selon des modalités spécifiées par l'usager.

Par exemple, les modalités spécifiées par l'usager comprennent la fréquence des rappels ou le nombre de rappels.

Selon un mode de mise en oeuvre particulier, ce procédé comporte en outre une étape d'identification de l'abonné, préalable à un accès aux moyens de mémorisation.

D'autres buts, caractéristiques et avantages de l'invention apparaîtront à la lecture de la description qui va suivre, donnée uniquement à titre d'exemple non limitatif, et faite en référence aux dessins annexés, sur lesquels :
- la figure 1 est un schéma synoptique illustrant la structure générale d'un système interactif de programmation de rappel d'événement conforme à l'invention ; et
- la figure 2 est un organigramme illustrant le procédé de programmation de rappel d'événement conforme à l'invention.

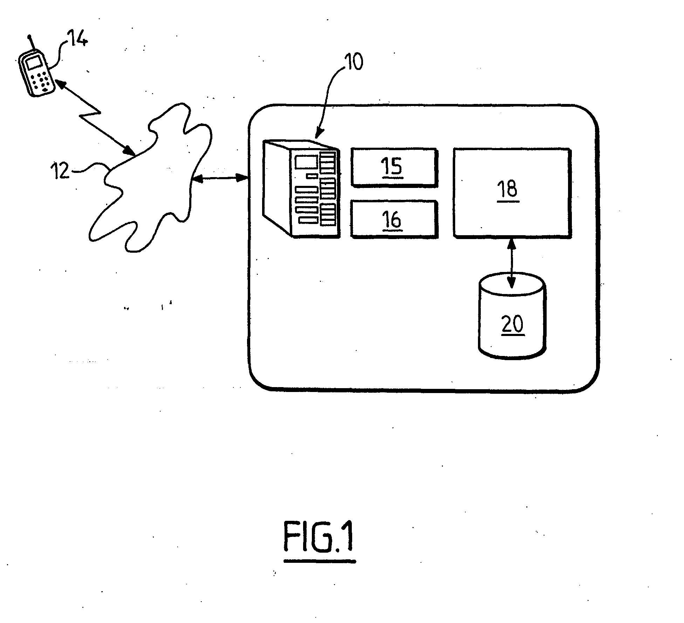

En se référant tout d'abord à la figure 1, le système interactif de programmation conforme à l'invention comporte essentiellement un serveur vocal 10 interactif raccordé à un réseau téléphonique mobile 12. Ce réseau 12 est accessible par l'intermédiaire d'un poste de télécommunications de type mobile 14, par exemple un poste téléphonique cellulaire, d'un abonné à un opérateur de télécommunications proposant un service de rappel d'événement par messagerie.

Le serveur vocal interactif 10 est associé à des moyens de reconnaissance vocale 15 et à des moyens de synthèse vocale 16. Ces moyens de reconnaissance vocale et de synthèse vocale sont constitués par des moyens de type classique, appropriés pour l'utilisation envisagée. Ils ne seront donc pas décrits en détail par la suite.

On voit par ailleurs sur la figure 1 que le système de programmation comporte en outre un étage logiciel de programmation de rappel d'événement, désigné par la référence numérique générale 18, raccordé au serveur vocal 10 et accessible à un usager par l'intermédiaire du serveur vocal 10.

Cet étage logiciel de programmation est associé à un calendrier logiciel 20. Il comporte, stockés en mémoire, des moyens logiciels permettant, d'une part, de procéder au stockage dans une mémoire de l'étage logiciel, dans un compte associé au porteur du poste 14, d'un message reçu en provenance de ce poste 14 par l'intermédiaire du serveur 10 et, d'autre part, de récupérer ce message et de le transmettre vers le poste 14, soit directement, après appel du serveur 10, soit de manière programmée, à un instant prédéterminé et/ou selon une fréquence programmée, lors du stockage de ce message en mémoire, en provoquant l'appel du poste 14 par le serveur 10.

Pour ce faire, l'étage logiciel 18 comporte des moyens d'identification de l'abonné utilisateur du poste 14, de manière à lui permettre, en cas d'identification, d'accéder à son compte pour le stockage ou la récupération d'un message. Ces moyens d'identification peuvent être de différentes natures. Par exemple, ils consistent à vérifier l'identité du porteur du poste en contrôlant un code d'identification, soit saisi au moyen du clavier du poste, soit énoncé par l'utilisateur.

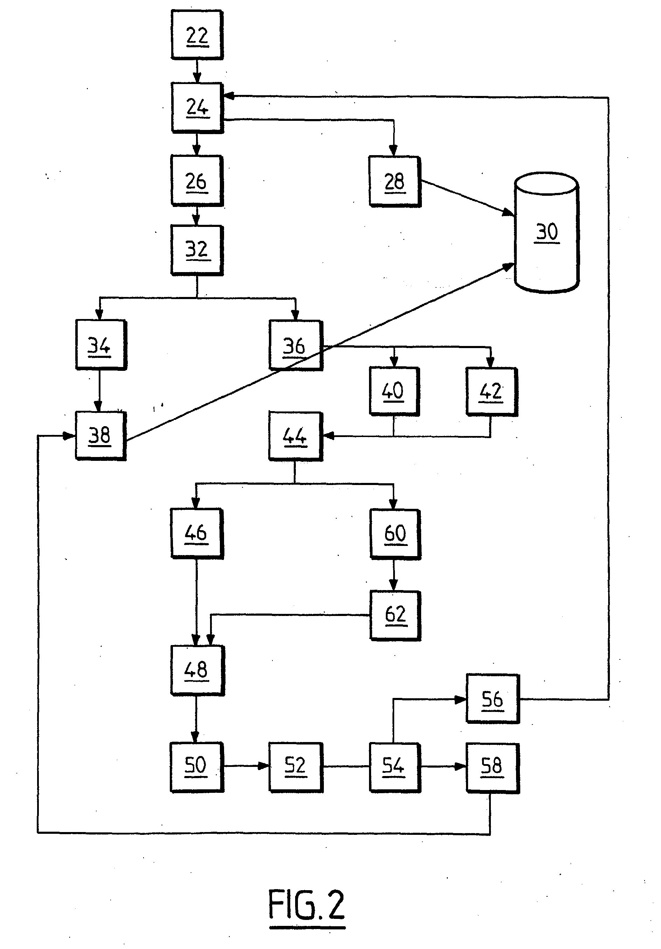

En se référant maintenant à la figure 2, le système qui vient d'être décrit fonctionne de la façon suivante.

Lors d'une première étape 22, l'utilisateur compose à l'aide du clavier de son poste 14 le numéro du serveur vocal interactif 10, de manière à pouvoir accéder à l'étage logiciel de programmation 18.

D'après identification, l'utilisateur a accès à un menu (étape 24) lui proposant, soit d'enregistrer un message (étape 26), soit de consulter un message préalablement enregistré (étape 28).

Dans le cas où l'usager souhaite consulter un message préalablement enregistré dans une boîte vocale, le message correspondant est directement extrait des moyens de mémorisation par l'étage logiciel de programmation, puis est retransmis vers le poste 14 (étape 30).

Au contraire, si l'utilisateur souhaite procéder à l'enregistrement d'un message, celui-ci, après avoir été énoncé par l'usager, est mémorisé dans une boîte vocale de l'étage logiciel de programmation de rappel à une adresse correspondant au compte de l'usager.

Lors de l'étape 32 suivante, l'usager est interrogé de manière à déterminer le mode de consultation du message choisi par l'utilisateur.

En réponse, l'utilisateur sélectionne, soit un premier mode de fonctionnement selon lequel le message mémorisé doit être récupéré par appel du serveur (étape 34), soit un deuxième mode de fonctionnement (étape 36) selon lequel l'usager demande que le message lui soit retransmis automatiquement et programme l'appel par le système interactif de son poste téléphonique.

Dans le cas où le premier mode de fonctionnement est sélectionné, lors de l'étape 38 suivante, l'utilisateur raccroche. Pour récupérer le message, il conviendra d'appeler le serveur et de lui transmettre des instructions lui commandant d'aller récupérer et lire le message stocké dans la boîte vocale.

Au contraire, si le deuxième mode de fonctionnement est sélectionné, l'usager doit programmer, soit un appel vers son poste téléphonique fixe (étape 40), soit un appel vers son poste téléphonique mobile (étape 42).

Lors de la phase suivante de la procédure de programmation, il est procédé à une saisie de l'instant du rappel.

Cette phase débute par une première étape 44, au cours de laquelle le serveur vocal 10 demande si le rappel doit être effectué le même jour. En cas d'une réponse positive reçue par le système de programmation (étape 46), le serveur 10 demande, lors de l'étape 48 suivante, de préciser l'heure à laquelle doit être effectué le rappel puis, lors de l'étape 50 suivante, de saisir la fréquence des rappels au moyen de son clavier. Un message est alors émis pour indiquer à l'usager que son rappel est enregistré (étape 52). Lors des étapes 54, 56 et 58 suivantes, il est demandé à l'utilisateur de confirmer la programmation. Le serveur procédera alors à l'appel de l'abonné à l'heure spécifiée, soit sous la forme d'un unique appel, soit sous la forme d'appels successifs effectués selon la fréquence programmée.

Au contraire, si en réponse à la question formulée précédemment lors de l'étape 44, l'usager demande que le rappel soit effectué un autre jour (étape 60), lors de l'étape 62 suivante, le serveur vocal interactif demande à l'usager de préciser la date à laquelle doit être effectué le rappel. La procédure se poursuit alors par les étapes 48 à 58, précédemment mentionnées.

Comme on le conçoit, l'invention qui vient d'être décrite permet de stocker en mémoire, dans un serveur, un message de taille relativement important, sans nécessiter une saisie de ce message. Il est ainsi possible de procéder à un stockage d'un message même en utilisant un poste dépourvu d'interface permettant une saisie aisée de messages.

On conçoit de même que la programmation de la récupération du message est également aisée à effectuer.

## Revendications

1. Système interactif de programmation de rappel d'événement par messagerie, à partir d'un poste de télécommunications (14), **caractérisé en ce qu'**il comporte un serveur vocal interactif (10) raccordé à un réseau téléphonique (12) et adapté pour communiquer avec ledit poste, un étage logiciel (18) de programmation de rappel d'événement raccordé au serveur vocal et accessible par un usager par l'intermédiaire du serveur vocal, et des moyens de stockage (18) de messages accessibles à la demande de l'usager pour y stocker des messages entrés au moyen du poste et récupérer lesdits messages.

2. Système interactif selon la revendication 1, **caractérisé en ce qu'**il comporte en outre un calendrier logiciel (20) raccordé à l'étage logiciel de programmation, et **en ce que** ledit étage logiciel (18) de programmation comporte des moyens pour commander un appel du poste de l'usager à un instant et selon des modalités programmés par l'usager.

3. Système interactif selon l'une des revendications 1 et 2, **caractérisé en ce que** le serveur vocal interactif (10) comporte des moyens d'identification de l'usager.

4. Système interactif selon l'une quelconque des revendications 1 à 3, **caractérisé en ce que** le poste de télécommunications (14) est un poste téléphonique.

5. Procédé interactif de programmation de rappel d'événement par messagerie au moyen d'un système interactif selon l'une quelconque des revendications 1 à 4, **caractérisé en ce qu'**il comporte les étapes suivantes :
- appel d'un serveur vocal interactif (10) à partir dudit poste ; et
- enregistrement d'un message dans des moyens de stockage de messages ;
ledit message pouvant ultérieurement être récupéré, à la demande d'un usager, par appel du serveur (10) et interrogation des moyens de mémorisation.

6. Procédé interactif de programmation de rappel d'événement selon la revendication 5, **caractérisé en ce qu'**il comporte en outre une étape de programmation d'un appel du poste (14) de télécommunications, par le système de programmation de rappel, à un instant et selon des modalités spécifiées par l'usager.

7. Procédé interactif de rappel d'événement selon l'une des revendications 5 et 6, **caractérisé en ce que** les modalités spécifiées par l'usager comprennent la fréquence des rappels.

8. Procédé de rappel d'événement selon l'une des revendications 5 et 6, **caractérisé en ce que** les modalités spécifiées par l'usager comprennent le nombre de rappels.

9. Procédé interactif de rappel d'événement selon l'une quelconque des revendications 5 à 8, **caractérisé en ce qu'**il comporte en outre une étape d'identification de l'abonné, préalable à un accès aux moyens de mémorisation.
